# EUROPEAN PATENT APPLICATION

(11) **EP 1 054 197 A1**
(43) Date of publication of application: **22.11.2000**
(21) Application number: 00201812.5
(22) Date of filing: 22.05.2000
(51) Int. Cl.: F16K 17/06

(54) **Safety valve**

(30) Priority: 21.05.1999 NL 1012131
(71) Applicant: DSW Rijswijk en Omstreken (Dienst Sociale Werkvoorziening), 2288 ED Rijswijk (NL)
(72) Inventor: Bloem, Reinier Leopold, 2611 CH Delft (NL)
(74) Representative: Jorritsma, Ruurd

(57) **Abstract**

Safety valve comprising a housing having an inlet (3) and outlet (4), as well as a valve seat. A spring (10) loaded valve (6) member provided with a diaphragm (8) seals the valve seat. On the other hand the spring bears on a valve holder (5) being connected to the valve housing. The connection is such that in the accommodation of either the valve holder or the housing in either the housing or the valve holder, also the end of the diaphragm is accommodated. Engagement is trough a deformable circumferential edge (8). By more or less deformation of the circumferential edge, the free circumferential extremity of the diaphragm is compressed more or less and a higher or lower pretension results. In this way the spring pressure can be preadjusted. The valve member can be displaced for test purposes by a rotating knob (35) provided on the valve holder. This can be realised such that only rotation in one direction gives lifting.

## Description

The subject invention relates to safety valve comprising a valve housing provided with an inlet portion, an outlet portion and a spring loaded valve member sealing the connection of the inlet portion and outlet portion, engaging a seat provided in said housing and provided with a sealing diaphragm, wherein said valve member is slidably received in a valve holder, the valve holder being connected to the valve member at engagement of the diaphragm, and wherein means are provided to lift the valve member. Such a safety valve is generally known in the art and an used in all kind of installation as safety, wherein at exceeding a predetermined value connection between the inlet portion and outlet portion is realised and pressure is blown off. Such a valve is, for example, described in EP 0 882 921 A2. Because said valve are not or barely effective during normal use, there is a considerable chance that several parts thereof become clamped. Because of that high requirements are set by the related authorities. For example the spring used has to be made from a material which is non corrosive relative to the medium used. In practice this means that such a spring must to be made for stainless steel.

Furthermore, high requirements are set by the authorities with regard to the precision of functioning of such a valve. Generally, authorities will require a guaranteed maximum pressure at which the valve should open anyhow. On the other hand, the users will require that the minimum pressure at which the valve opens, approaches this maximum pressure as much as possible in order to prevent opening and so spoiling and wasting as much as possible.

This means that high requirements are set to the precision of the several parts. In spite of detailed monitoring in the production, it has been found that considerable tolerances exist. Because of that a high drop-out percentage of the valve has been shown. An important problem is based on the used spring. A considerable spread in the characteristics of the springs have been observed. Of course, by previous testing of the springs, it can be prevented that completely mounted valves have to be discarded. However, this is time consuming and costly. Furthermore, it can not be guaranteed that after production and testing during transport further problems with the springs occur. If the springs are not packaged separately, there is danger that the springs become entangled and during separation are subjected to slight plastic deformation, so that the previous guaranteed value cannot longer be assured.

The subject invention aims to provide a safety valve being realised such that during production tolerances can be compensated for in a simple way.

This aim is realised with a safety valve as described above having the characterising features of claim 1. By the adjustability of the connection between the valve holder and the valve housing the spring pressure acting an valve member can be adjusted during mounting. This adjustability can be realised with any method known in the art, such as with treads and radial (relative to the longitudinal axis of the displacement direction of the valve member) clamping.

According to a preferred embodiment of the invention an accommodation is provided in either the valve holder or the housing. In this accommodation not only the free circumferential part of the diaphragm is entered but also either the housing or the valve member. Subsequently, this accommodation is closed by deformable edge. The free circumferential part of the diaphragm functions as sealing. If the height of the free circumferential and of the diaphragm is considerable, for example 1 mm or more, it is possible to realise some variation in the position between the valve holder and the housing through more or less sliding in each other. This more or less slid position in each other can be fixed by the deformable circumferential edge. Of course, this relative position is adjusted such that the optimum spring pressure can be realised.

It is also possible to adjust the optimum spring pressure by shims and the like.

In safety valves generally a mechanism is provided to test the functioning thereof. Generally, to that end a rotating knob is used being provided on the valve holder. During rotation the valve member is moved against the spring pressure and the valve seat is liberated. Possible clamping can be realised in this way. It is important that the cap or knob realising this lift movement and being at the exterior of the valve holder is not also displaced because during the return movement which is generally instantaneously, the danger exists that the user is clamped with his fingers. To that end all kind of structures have been proposed. However, these structures have the draw back that the lifting movement of the lifting member can be realised by rotating the knob in two directions. This is not desired. However, it is not possible to restrict the rotational movement to only one direction because by forcible rotating in the other direction the mechanism would be damaged.

It is a further aim of the invention to provide a safety valve not having this draw back.

This aim is realised with a safety valve as described above, wherein said means for lifting said valve member comprising a cam trajectory, being provided along the circumference of the upper part of to valve holder, a lifting member being rotatable over said cam trajectory by a cap, said lifting member being rotabably connected with said valve member.

More particular, the connection between the valve member and the lifting member comprises a pin extending from the bottom of the valve member.

The engagement means between the knob and the lifting member are realised such that during rotation in one direction engagement is realised and during rotation in the opposite direction no rotation is realised.

It has to be understood that the embodiment described above of the lifting mechanism through rotation of the knob is independent of the adjustment with displacement of the valve holder relative to the housing. I.e. these measures can also be realised at other safety valves.

The invention is further explained by way of the example given in the drawing, in which:
Fig. 1 shows a cross-section of a safety valve;
Fig. 2 shows a plan view of the valve holder with the guiding arms of the valve member;
Fig. 3 shows a cross-section of an assembly of valve member, diaphragm and valve holder,
Fig. 4 shows partially cut away a further embodiment of the safety valve according to the invention;
Fig. 5 shows perspectively the lifting member to be used in the embodiment of fig. 4 according to a first embodiment;
Fig. 6 shows an internal view of the cap to be used with the structure of fig. 4; and
Fig. 7 shows a second embodiment of the lifting member to be used with the embodiment according to fig. 4.

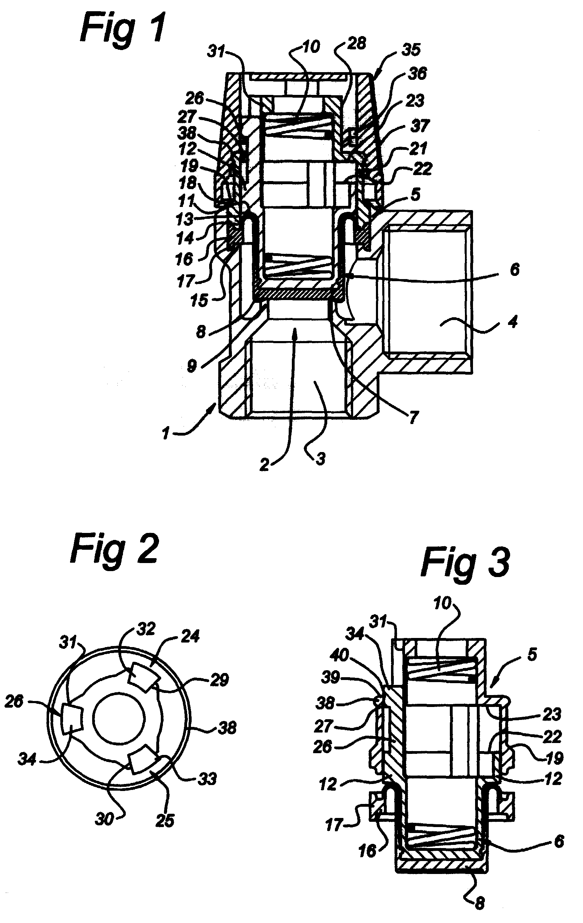

In Fig. 1, 1 indicates the housing of the safety valve having a passage 2, the passage being provided with an inlet portion 3 and an outlet portion 4. The inlet portion 3 and the outlet portion 4 provide in the usual way connecting possibilities for connecting the pipes to be connected to them, which can be threaded, but also with press fluings, snap fittings, and the like, for example.

A valve holder 5 is received in the housing, which provides guidance for the valve member 6 retained in it. The valve member 6 has a first cylindrical portion 7, directly connected by a large part of diaphragm 8, and which is kept on a valve seat 9 at the lower side. The valve member 6 is kept on the valve seat with a pressure spring 10 mounted between the valve member 6 and the valve holder 5, the points of engagement on valve member and valve holder respectively being spaced apart as far as possible within the dimensions of the safety valve.

The diaphragm 8 lies directly against the lower side and the lateral sides of the first cylindrical portion 7, subsequently at the transition of the first cylindrical portion 7 to the second cylindrical portion 12 of the valve member 6 again the shoulder 11 formed there, and thereupon against the inner side 13 of the valve holder 6, whereupon the diaphragm passes into an edge portion 16, 17.

The edge portion consists of an inner ring 16 and an outer ring 17 in which the outer ring extends to under and above the inner ring. In the housing 1 and in the valve holder 5, the respective profiles 15 and 14 have been mounted for receiving the edge portion 16, 17. The edge portion 16, 17 is clamped between the valve holder 5 and the housing 1 by retaining the valve holder 5 into the housing 1.

The valve holder 5 is retained by pressing the deformable edge 18 onto the obliquely extending part 19 of the outer side of the valve member 5. Here, the edge portion 16, 17 of the diaphragm 8 is clamped firmly enough for being able to remain clamped at all times and simultaneously the valve member 6 is moved against the valve seat 9 with the proper spring force. Preferably, an obliquely extending portion is used so that the distance across which the deformable edge is to be pressed can remain relatively small. At the same time this provides for the possibility of, if on testing the safety valve it turns out to open prematurely on account of the spring pressure of the valve against the valve seat being too low, by pressing the deformable edge further, bringing the spring against the valve seat with exactly the right spring pressure. For example, by compressing deformable edge 18 0,1 mm more, the spring pressure can be increased such that the opening pressure of the valve seat is, for example, increased with 0,1 bar. With such an adjustability in the compensation of the product tolerance of the several components can be provided. This is in particular true for pressure spring 10. It has been found that during production and handling the force generated by such a spring at a determined compression vanes more than the tolerance generally acceptable or the openings pressure of safety valves according to the invention. It is possible to reduce such tolerance, but the number of a rejected springs will considerably increase. With the adjustability according to the invention, wherein the edge 18 is deformable, such tolerance can be simply compensated for. The height of the inner ring 16 is, of course, such that some compression is possible. It can for example hew a height of 2 mm. The values mentioned above are, of course, only examples.

Above the first cylindrical portion 7, the valve member 6 has a second cylindrical portion 12 which is guided in the first cylindrical portion 21 of the valve holder 5. With large overpressure, the edge 22 of the second cylindrical portion 20 will come to lie against the stop 23 of the valve holder 5 and the force is transferred to the valve holder and the housing.

The second cylindrical portion 12 of the valve member 6 is provided with a number of guiding arms 24, 25, 26 pointing upwards, protruding upwards through passages 27 in the stop 23 and until beyond the valve holder 5. Here, three sides of the guiding arms will at least partly be situated in grooves 29, 30, 31 in the outer wall 29 of the upper cylindrical portion 28 of the valve holder 5. In this way, the bottom part of valve member 6 will have the first cylindrical portion contacting a guiding wall of valve member 5 and its top part will have at least part of the length of the guiding arms against a guiding wall of valve member 5, as a consequence of which pulling out of position is impossible and good guidance can be guaranteed at all times.

At their outer ends, the guiding arms are provided with cams 32, 33, 34 protruding outwards being arranged for co-operating with guides 36 mounted in the turning knob 35 to be positioned on the safety valve. The turning knob 35 can be placed on the valve holder 5 by a snap connection, to which end the turning knob is provided with a groove 37 and the valve holder is provided with an edge 38.

Fig. 3 shows a cross-section of an assembly of valve member 6, diaphragm 8, valve holder 5 and spring means 10. A groove 40 intended to form a snap fit together with the cam 39 mounted in the passage opening 27, is mounted in the outer surface of the cam 34 of the guiding arm 26. The snap connection comes about in a position of valve member 6 and valve holder 5 in relation to each other being beyond the range of positions being possible with normal pressure and overpressure.

Valve member 6 and valve holder 5 are fixed in relation to each other in order to be sure that on inserting an assembly consisting of valve member 6, diaphragm 8, valve holder 5 and spring means 10, this will occur in upright position and the valve member 6 will come to lie straight on the valve seat 9. As soon as the valve member 6 lies on the valve seat 9, the valve holder 5 is moved further into the housing in order to bring the spring means at the correct pretension, and valve member 6 and valve holder 5 spring loose form the snap connection. On achieving the normal position, the cam 34 will come to lie above the passage opening 27, see fig. 1.

In fig, 4-6 a further embodiment of the safety valve according to the invention has been shown. Corresponding parts are provided with a same reference numbers as much as possible.

In the shown embodiment the housing is also referred to by 1 and the structure of the diaphragm 8, shoulder 11, inner ring 16 and outer ring 17 has is been changed relative to the structure described above. The same is true for the presence of the deformable edge 18.

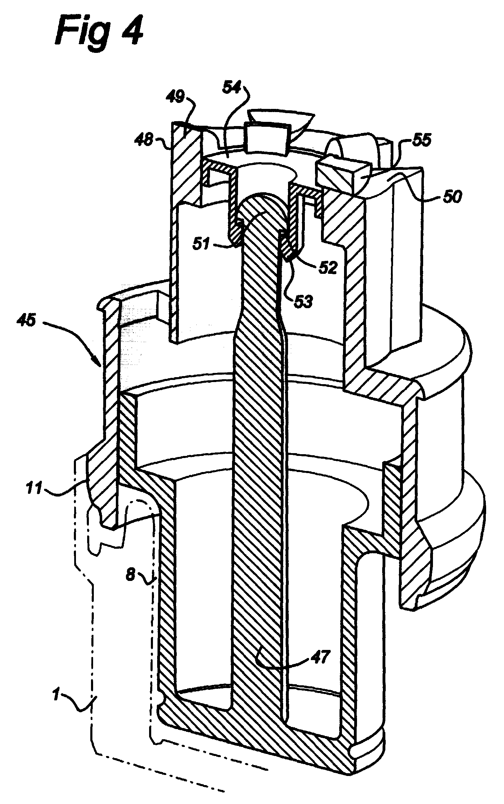

The embodiment shown in figs. 4-6 differs with regard to the method in which the valve member 6 can be pressed in upward direction for testing purposes. To that end the valve member 46 is provided with a pin 47 extending from the bottom thereof. Around pin 47 in a way not shown, the spring 10 described above can be received which supports in the same way against the valve holder having reference 45. Its lower part has not been changed with regard to the embodiment shown before, whilst its upper part is referred to by 48 and provided with cams 49 and recesses 50.

In the embodiments shown, guiding of the valve member can be realised as described above with guiding arms 24-26 and corresponding openings. It is, of course, also possible to prevent in another way that the valve member rotates relative to the housing, the valve holder respectively.

Near its free extremity pen 47 is provided with a head 51 and shoulders 52. Below shoulders, arms 53 engage, being connected with a lifting member rotatable relative to the pin. This lifting member is provided with a number of protruding parts 55 embodied to engage cams 49, recesses 50 respectively.

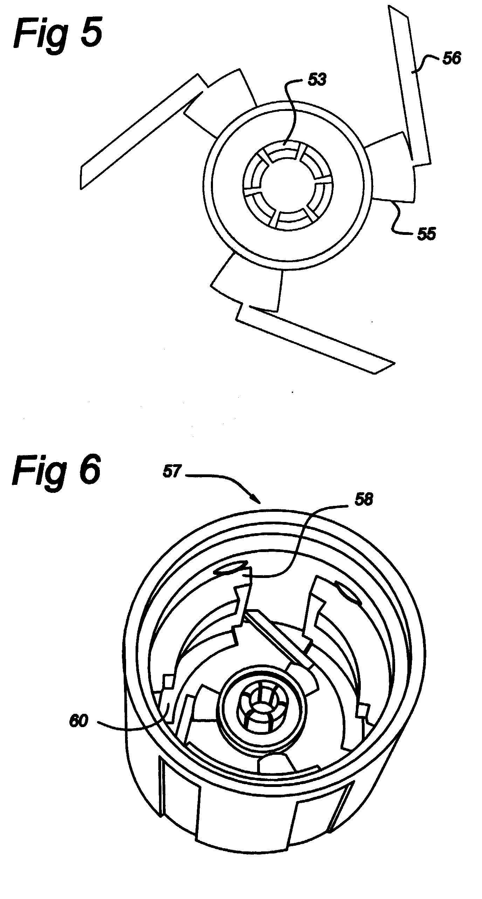

A detail of lifting member 54 is clear from fig. 5. It is clear from that figure that resilient arms 56 are connected to protruding parts 55. These are realised to be resiliently compressible in radial direction (relative to the longitudinal axis of the safety valve).

In fig. 6 57 refers to the cap or knob shown. This cap is provided with a snap edge not shown in detail. Furthermore, it is internally provided with cams 58. As is clear from fig. 6 only in one rotational direction of cap 57 engagement between cams 58 and resilient arms 56 can be provided. At rotation in a different direction because of the resilient action of the arms 56 no engagement with the cams 58 will be realised. I.e. it is only possible to provide engagement between lifting member 54 and cap 57 by rotation in one direction.

Also in this structure during rotation, the cap is not moved upwardly or downwardly, but the up and down movement is realised by movement of the lifting member 54 relative to the valve holder 45.

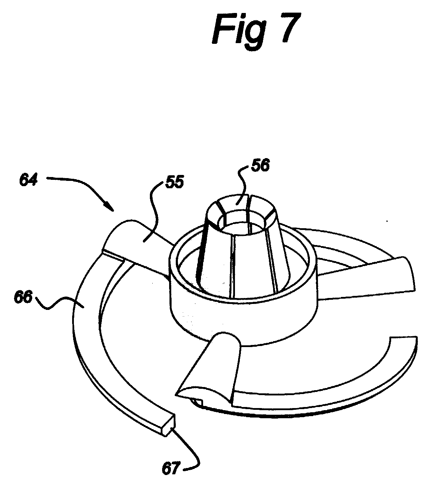

In fig. 7 a further embodiment of the lifting member referred to be 64 is shown. Also in this embodiment the lifting member is provided with arms 53 for engagement below shoulder 52 of head 51 of pin 47. Furthermore, protruding parts 55 are provided. In contrast to the embodiment described above, the resilient arms 66 are displaceable in axial direction. The extremities are realised somewhat smaller and referred to by 67. These are released to engage in recesses 60 (see fig. 5) of cap 57. Also in this embodiment only by rotation in one direction engagement can be effected between the cap and the lifting member 64.

From the above it is clear that numerous deviations from the inventive thought are possible. After reading the above description a person skilled in the art will, of course, develop further embodiments being within the range of the enclosed claims.

## Claims

1. Safety valve comprising a valve housing (1) provided with an inlet portion (3), an outlet portion (3) and a spring (10) loaded valve member (6, 46), sealing the connection of the inlet portion and outlet portion, engaging a seat provided in said housing and provided with a sealing diaphragm (8), wherein said valve member (6, 46) is slidably received in a valve holder (5, 45), the valve holder being connected to the valve member at engagement of the diaphragm (8), and wherein urns are provided to lift to valve member, characterised in that, the connection between valve holder, housing and diaphragm comprises an accommodation between the valve holder and the housing for receiving the circumferential extremity (16, 17) of the diaphragm therein, wherein to connection between valve holder and housing is realised adjustable.

2. Safety valve according to claim 1, wherein either the valve holder or the housing is provided with accommodation for receiving either the housing or the valve holder, wherein said accommodation is provided with a deformable circumferential edge (18).

3. Safety valve according to claim 2, wherein said deformable circumferential edge is adjusted in order to adjust the spring pressure between the valve member and the valve holder.

4. Safety valve according to one of the preceding claims, wherein said means for lifting said valve member comprise a cam trajectory (49, 50), being provided along the circumference of the upper part of the valve holder, a lilting member (64) being rotatable over said cam trajectory by a cap (57), said lifting member being rotabably connected with said valve member (46).

5. Safety valve according to claim 4, wherein said connection between valve member and lifting member comprises a pin (47) extending from the bottom of the valve member.

6. Safety valve according to claim 4 or 5, wherein the engagement means between said cap (57) and said lifting member are realised such that at rotation in a direction engagement is effected and at rotation in counter-direction no lilting occurs.
